# EUROPEAN PATENT APPLICATION

(11) **EP 1 203 906 A2**
(43) Date of publication of application: **08.05.2002**
(21) Application number: 01309302.6
(22) Date of filing: 01.11.2001
(51) Int. Cl.: F16J 15/32

(54) **Brush seal device**

(30) Priority: 01.11.2000 JP 2000334441
(71) Applicant: Eagle Engineering Aerospace Co., Ltd., Minato-ku, Tokyo 105-8587 (JP)
(72) Inventor: Kono, Toro, Eagle Engineering Aerospace Co., Ltd., Sakado-shi, Saitama 350-0285 (JP)
(74) Representative: Feakins, Graham Allan

(57) **Abstract**

A brush seal device for sealing a gap of varying dimensions between two parts moving relatively, has a brush (2) formed by a number of thin bristles (3) arranged in a wall-like form, one end secured to one part in parallel with a retaining portion (4) that supports the brush (2), and a seal portion at the other end facing the other part for sealing the gap. The brush (2) is formed so as to be easily deflected even if the brush (2) is pressed by the retaining portion (4) due to the balance of the pressure between the retaining portion and the inside of the pressure balancing groove (6). Further, an edge portion at the periphery of the pressure balancing groove (6) is formed into a gently slanted surface so that it does not wear on the brush (2).

## Description

### Technical Field

The present invention relates to a brush seal device for sealing a gap between two parts that move relative to each other (such as rotational movement and reciprocating movement), and more particularly to a brush seal device for sealing between two parts using a brush.

### Background Art

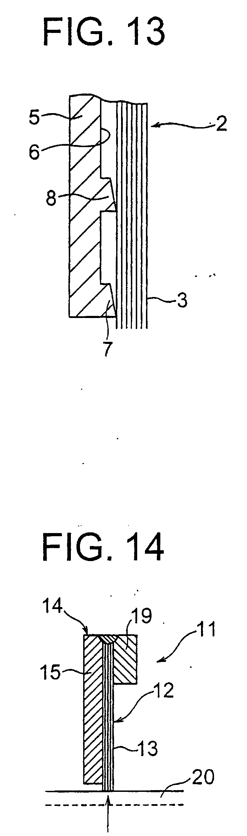

There are various types of conventional seal devices that seals between two parts that move relative to each other (such as in rotational movement, reciprocating movement). For example, a brush seal device as shown in Figs. 14 to 18 is generally known.

A brush seal device 11 is provided with a brush 12 formed by bundling a plurality of thin bristles 13 made of highly rigid material such as metal, synthetic resin, ceramics, composite material or the like. The brush seal device is also provided with a retaining member 14 which consists of a back plate 15 and a side plate 19 to retain the brush 12.

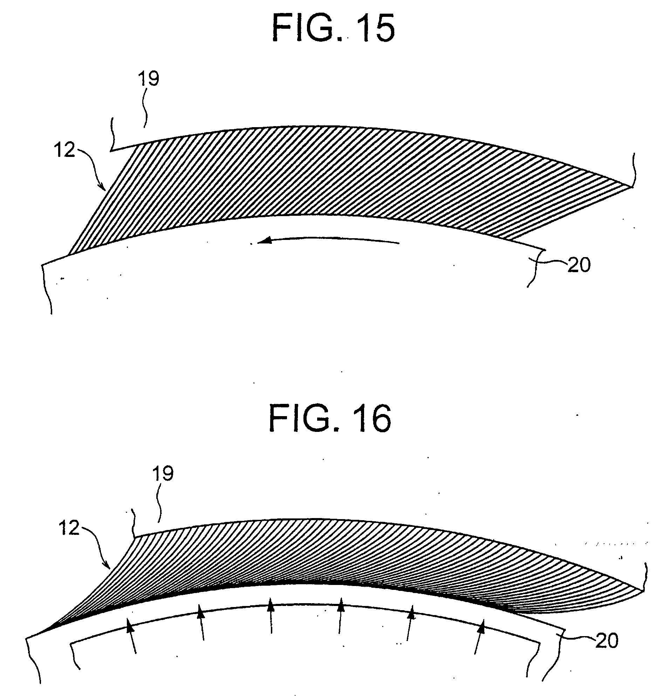

Next, the retaining member 14 is secured to one part (fixed body not shown in the drawing) of two parts that move relative to each other (such as rotational movement and reciprocating movement). With the one part being secured, the brush 12 at the tip portion contacts the other part (rotational body) 20. Alternatively, creation of a small gap between the tip portion of the brush 12 and the other part 20 permits sealing a gap between two parts that move relative to each other (see Figs. 14 and 15).

There are some cases where the other part 20 may sometimes be off-centered by rotation, be deformed by rotational force, or there may be a relative dimensional change between the other part 20 and the one part (fixed body) due to difference of thermal expansion coefficients or the like. In these cases, in accordance with the movement of the other part 20, the entire brush 12 is deflected in the radial direction so as to reduce the contact force. This results in decrease in wear of the brush 12 at the tip portion and inhibition of sealed fluid leakage.

However, in the brush seal device 11 with the above-described structure, there are some cases where the other part 20 may sometimes be off-centered by rotation, be deformed by rotational force, there may be a relative dimensional change between the other part 20 and the one part (fixed body) due to a difference of thermal expansion coefficients or the like. In these cases, the brush 12 is firmly pressed to the back plate 15 side by a pressure differential between the pressures at the upstream side and the downstream side. In this case, when the other part 20 is pressed to contact the brush 12, friction resistance between the back plate 15 and the brush 12 and that between the brush 12 and the thin bristles 13 inhibits the brush 12 to be deflected to escape in the radial direction, resulting in wear of the brush 12 at the tip portion (see Fig. 16).

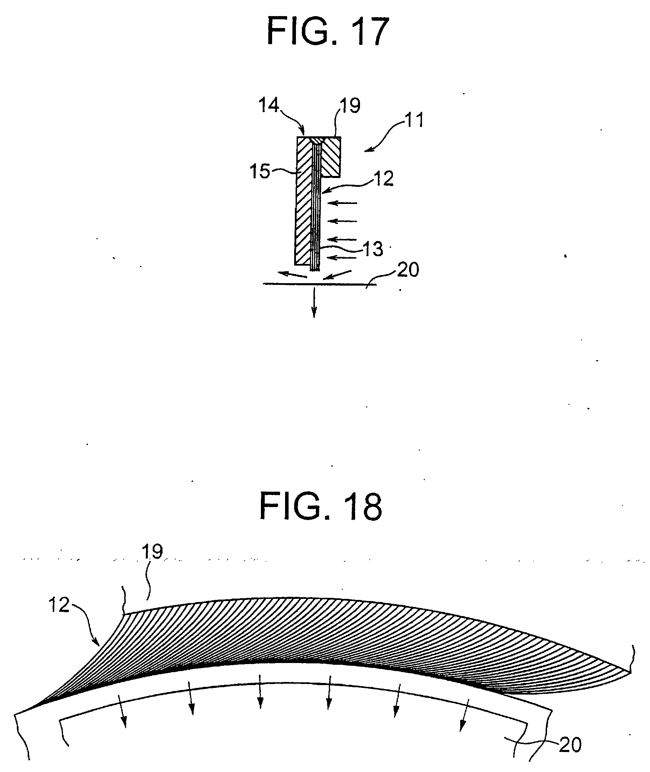

On the other hand, there are some cases where the expansion or the eccentricity of the other part 20 becomes smaller. In these cases, when the brush 12 is retained in a state being deflected to the back plate 15 side due to friction resistance between the back plate 15 and the brush 12 and that between the brush 12 and the thin bristles 13, it becomes difficult for the brush 12 to return from the deflected state to its original state. This increases the gap between the tip portion of the brush 12 and the other part 20 and results in leakage (see Figs. 17 and 18).

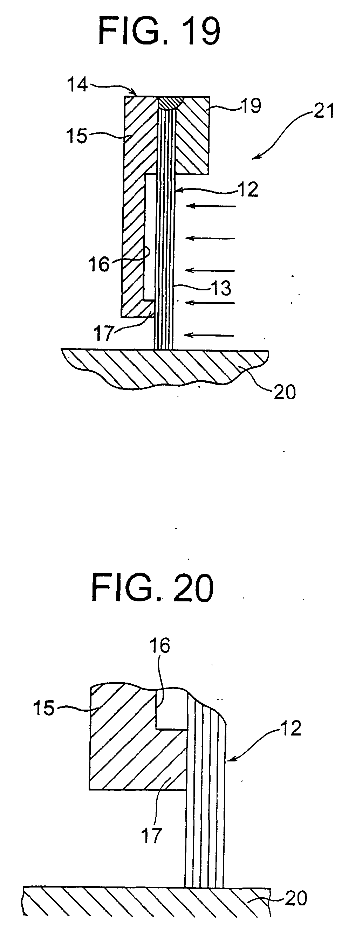

In order to solve the foregoing problems of the wear of the brush 12 at the tip portion and the resulting increase sealed fluid leakage, a brush seal device 21 is proposed provided with a pressure balancing groove 16 on a contact surface of the back plate 15 with the brush 12, as shown in Figs. 19 to 22.

In the brush seal device structured as above, the pressure balancing groove 16 can reduce the force pressing the brush 12 in the direction toward the back plate 15, reducing friction resistance between the back plate 15 and the brush 12 and that between the brush 12 and each thin bristle 13. In addition, when the other part 20 is off-centered by rotation, the other part 20 is deformed due to the rotation thereof, or there is a relative dimensional difference between the other part 20 and the one part (fixed body) due to thermal expansion coefficients, the brush 12 can be deflected in the radial direction in accordance with the movement of the other part 20 and wear of the brush 12 at the tip portion can be prevented. In addition, the brush 12 can return from the deflected state to its original state. This prevents an increase in the gap between the tip portion of the brush 12 and the other part 20 and an increase in sealed fluid leakage.

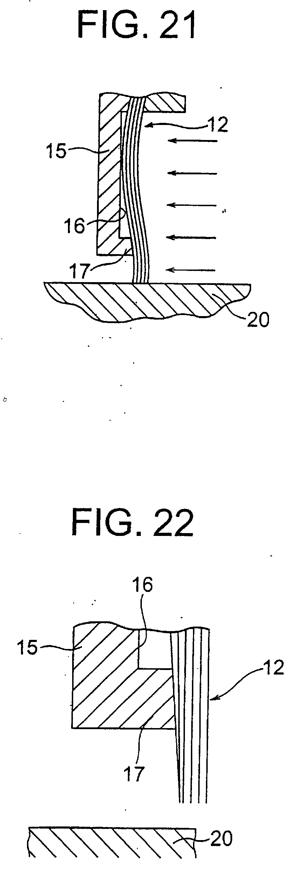

If, however, the effect of the pressure balancing groove 16 is not sufficient, when the brush 12 is repeatedly deflected in the radial direction in accordance with the movement of the other part 20, a portion of the brush 12 contacting an edge portion 17 constituting the pressure balancing groove 16 is gradually worn out. The portion of the brush 12 that wears out catches on the edge portion 17, inhibiting the brush 12 from smoothly being deflected in the radial direction. In addition, the brush 12 is inhibited from returning from the deflected state to its original state, resulting in wear of the tip portion of the brush 12. This increases the gap between the tip portion of the brush 12 and the other part 20 and subsequently the sealed fluid leakage (See Figs. 21 and 22).

Further, when the brush 12 is pressed to the back plate 15 side, it is slanted in the axial direction so as to contact the bottom surface of the pressure balancing groove 16. When this is repeated, a portion of the brush 12 contacting the edge portion 17 constituting the pressure balancing groove 16 is gradually worn out. The portion of the brush 12 that wears out catches on the edge portion 17, inhibiting the brush 12 from smoothly being deflected in the radial direction. In addition, the brush 12 is inhibited from returning from the deflected state to its original state, resulting in wear of the tip portion of the brush 12. This increases the gap between the tip portion of the brush 12 and the other part 20 and subsequently the sealed fluid leakage (See Figs. 21 and 22).

The present invention has solved the foregoing problems, and an object of the present invention is to permit the brush to smoothly move in the radial direction so as to prevent wear of a portion of the brush contacting the edge portion at the periphery of the pressure balancing groove, even if the brush is repeatedly deflected to escape in the radial direction in accordance with the movement of the other part.

Another object of the present invention is to prevent wear of a portion of the brush contacting the edge portion at the periphery of the pressure balancing groove and permit the brush to move smoothly in the radial direction, even if the brush is pressed in the direction toward the pressure balancing groove so as to repeatedly contact the edge portion at the periphery of the pressure balancing groove.

### Disclosure of the Invention

The first characteristic of the present invention is that a brush seal device in which an attachment portion at one end of the brush is retained by one of two parts that move relative to each other and a seal portion at the other end of the brush facing the other part seals a gap, comprises: a brush, made by arranging a plurality of thin bristles, provided with an attachment portion secured at one end and a seal portion for dividing between the two parts at the other end; and a retaining portion for retaining the attachment portion at one end of the brush, provided with a support surface disposed in parallel with the brush to support the seal portion relative to a direction of action of sealed fluid; in which a pressure balancing groove is formed in the support surface, and an edge portion which contacts the brush on the edge forming the pressure balancing groove is formed into a gently slanted surface so that even if the brush contacts the edge portion the brush does not wear out.

By configuring the present invention as above, the brush is pressed to the support surface of the retaining portion by the pressure differential between the pressures at the upstream side and the downstream side caused by the action of the sealed fluid. However, since the support surface of the retaining portion is provided with the pressure balancing groove, reaction force is applied from the sealed fluid entering the pressure balancing groove so as to reduce the force pressing the brush in the direction toward the retaining portion.

Further, there are some cases where the other part is off-centered during rotation, the other part is deformed due to rotation, or a dimensional change is generated in the gap between the other part and the one part (fixed body) due to a difference in thermal expansion coefficients between the relative parts. In these cases, provision of the pressure balancing groove permits the brush to be deflected to escape in the radial direction following a dimensional change of the gap, thereby effectively preventing wear of the brush at the tip portion.

In addition, a corner surface with which the brush contacts of the edge portion constituting the pressure balancing groove is formed into a gently slanted surface such as a tapered surface, an arc surface (or an R surface), or a surface combined with a tapered surface and an arc surface that are connected to each other. Therefore, even if the brush repeatedly contacts the pressure balancing groove, wear of a portion of the brush contacting the edge portion is prevented.

The second characteristic of the present invention is that a brush seal device in which an attachment portion at one end of the brush is retained by one of two parts that move relative to each other and a seal portion at the other end of the brush facing the other part seals a gap, comprises: a brush, made by arranging a plurality of thin bristles (3), provided with an attachment portion at one end and a seal portion for dividing between the two parts at the other end; and a retaining portion which retains the attachment portion at one end of the brush, provided with a support surface disposed in parallel with the brush to support the seal portion relative to a direction of action of sealed fluid; in which a pressure balancing groove on the support surface, wherein the bottom surface of the brush has a tapered surface slanted toward the attachment portion of the brush.

By configuring the present invention as above, even if the brush is pressed in the direction toward the pressure balancing groove so as to repeatedly contact the edge portion constituting the pressure balancing groove, a tapered surface (that is, a slanted surface) is formed on the bottom surface of the pressure balancing groove, and this tapered surface supports a portion of the brush contacting the edge portion constituting the pressure balancing groove, effectively preventing wear of the brush.

Further, another embodiment of the present invention has a retaining portion for supporting the brush inside the pressure balancing groove. It is preferable to form the edge portion of the supporting portion into a gently slanted surface that does not wear on the brush even if it contacts the brush.

In the above structured embodiment of the present invention, the brush is elastically supported by the sealed fluid pressure in the pressure balancing groove, and further effectively supported by the supporting portion. This reduces the amount of deformation of the brush in the direction toward the pressure balancing groove, thus prevention of wear of a portion of the brush contacting the edge portion of the pressure balancing groove can be expected.

### Brief Description of the Drawings

Fig. 1 is a sectional view of a brush seal device according to a preferred first embodiment of the present invention;
Fig. 2 is an enlarged sectional view showing the vicinity of the edge portion shown in Fig. 1;
Fig. 3 is a sectional view of a brush seal device according to a second embodiment of the present invention;
Fig. 4 is an enlarged sectional view showing the vicinity of the edge portion shown in Fig. 3;
Fig. 5 is a sectional view of a brush seal device according to a third embodiment of the present invention;
Fig. 6 is an enlarged sectional view showing the vicinity of the edge portion shown in Fig. 5;
Fig. 7 is a sectional view of a brush seal device according to a fourth embodiment of the present invention;
Fig. 8 is a sectional view of a brush seal device according to a fifth embodiment of the present invention;
Fig. 9 is an enlarged sectional view showing the vicinity of the edge portion shown in Fig. 8;
Fig. 10 is a sectional view of a brush seal device according to a sixth embodiment of the present invention;
Fig. 11 is a sectional view of a brush seal device according to a seventh embodiment of the present invention;
Fig. 12 is a sectional view of a brush seal device according to an eighth embodiment of the present invention;
Fig. 13 is a sectional view of a brush seal device according to a ninth embodiment of the present invention;
Fig. 14 is a sectional view of a conventional brush seal device when normally connected to the other part;
Fig. 15 is a side view of a part of the brush seal device as shown in Fig. 14;
Fig. 16 is a side view showing a state where the other part is pressed to contact the brush after the state shown in Fig. 15;
Fig. 17 is a sectional view showing a state when a gap is opened between the brush and the other part that the brush faces;
Fig. 18 is a side view showing a part of the state shown in Fig. 17;
Fig. 19 is a sectional view showing another conventional brush seal device;
Fig. 20 is an enlarged sectional view showing the vicinity of the edge portion of the brush seal device shown in Fig. 19;
Fig. 21 is a sectional view showing a state in which the brush is pressed in the direction toward the back plate; and
Fig. 22 is an enlarged sectional view of the edge portion shown in Fig. 21.

### Best Mode for Carrying Out the Invention

Hereinafter, the present invention shall be explained in more detail based on the drawings of the embodiments.

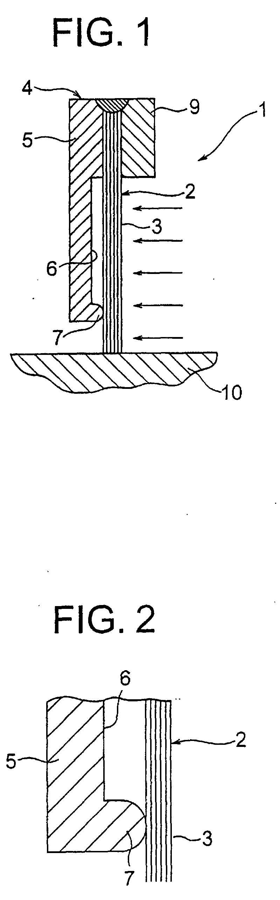

Figs. 1 and 2 show a first embodiment of the brush seal device according to the present invention. This brush seal device 1 is constituted by a brush 2 and a retaining portion 4 for retaining the brush 2.

The brush 2 is formed by bundling a plurality of thin bristles 3 made of material having high rigidity such as metal, synthetic resin, ceramics, composite material or the like. The brush 2 is formed into a shape matching the portion to be sealed, such as an annular shape, a semi-annular shape, a plate-like shape (such as a rectangle) or the like. According to this embodiment, the brush 2 is formed into an annular shape because the brush seal device aims to seal a gap between two parts that perform relative rotational movement. In this case, the inner peripheral side of the brush 2 except the outer peripheral attachment portion thereof corresponds to the seal portion.

The retaining portion 4 is formed into a shape similar to the brush 2 that is an annular shape a semi-annular shape, a plate-like shape or the like. According to the first embodiment, the retaining portion 4 is formed into an annular shape like the brush 2 because the brush seal device aims to seal a gap between two parts that perform relative rotational movement.

The retaining portion 4 is constituted by an annular back plate 5, and an annular side plate 9 which is integrally attached to one side of the back plate 5 by connecting means such as welding or bolts. In this case, while the back plate 5 has substantially the same outside diameter as a side plate 9, it has a smaller inside diameter.

The brush 2 is retained between the back plate 5 and the side plate 9. In this case, the brush 2 is configured such that and a portion thereof closer to the outside diameter is sandwiched between the back plate 5 and the side plate 9 with one side face of the brush 2 connected to one side face of the back plate 5. Further, the outside diameter end portion of the brush 2 is integrally connected to the outer peripheral portions of the back plate 5 and the side plate 9 by means of welding or the like. The inner peripheral surface of the brush 2 is formed of a smaller diameter than the inner peripheral surface of the back plate 5 by a predetermined length.

A pressure balancing groove 6 with a predetermined depth is formed into an annular shape over the entire support surface of the back plate 5, which also serves as a contact surface with the brush 2 (excluding a surface facing the side plate 9). A surface of the pressure balancing groove 6 from which an edge portion 7 is protruded is formed into an arc surface.

Further, in the above structured brush seal device 1 according to the first embodiment, the retaining portion 4 is secured to one (fixed body, which is not shown) of two parts that move relative to each other (such as rotational movement), and the inside diameter end portion of the brush 2 contacts the other part 10 (rotational body). With regard to this contact, a small gap may be created between the inside diameter end portion of the thin bristles 3 of the brush 2 and the other part 10, as necessary. In this case, a gap between the two parts may be sealed while reducing resistance caused by contact of both parts that move relative to each other.

According to this configuration, the pressure balancing groove 6 is provided on the support surface (or the contact surface) of the back plate 5 with the brush 2. Accordingly, the force of pressing the brush 2 in the direction toward the back plate can be reduced because the pressure balancing groove 6 reduces the contact area and the brush is supported by the fluid pressure in the pressure balancing groove. In addition, this permits the brush 2 to be smoothly deflected to escape in the radial direction in accordance with the movement of the other part 10. Accordingly, wear of the brush at the tip portion can be prevented.

Further, even when the other part 10 becomes deformed by rotational force or the eccentricity during rotation becomes smaller, friction resistance between the brush 2 and the back plate 5 is small. This inhibits the brush 2 to be retained in a state deflected to the back plate 5 side, but permits it to smoothly return from the deflected state to its original state. Accordingly, there is no increase in a gap between the inside diameter end portion of the brush 2 and the other part 10, such that sealed fluid leakage is prevented.

Further, there are some cases where the brush 2 is repeatedly deflected in the radial direction in accordance with the movement of the other part 10 so as to repeatedly contact the edge portion 7 constituting the pressure balancing groove 6. Even in these cases, the entire protruded surface from the edge portion 7 constituting the pressure balancing groove 6 is formed into an arc shape. Therefore, wear of a portion of the brush 2 contacting the edge portion 7 can be prevented.

Accordingly, smooth movement of the brush 2 in the radial direction, that is prevented by the portion of the brush 2 that has worn out catching on the edge portion 7 of the pressure balancing groove 6, is no longer able to be prevented, and wear of the brush 2 at the tip portion, an increase in the gap between the brush 2 and the other part 10, and the resultant occurrence of leakage can be prevented.

Further, there are some cases where the brush 2 is pressed to the back plate 5 side so as to repeatedly contact the edge portion 7 at the periphery of the pressure balancing groove 6. Even in these cases, since the entire surface of the edge portion 7 of the pressure balancing groove 6 is formed into an arc shape, wear of the brush 2 at a portion contacting the edge portion 7 is able to be prevented.

Accordingly, smooth movement of the brush 2 in the radial direction, that is prevented by the portion of the brush 2 that has worn out catching on the edge portion 7 of the pressure balancing groove 6, is no longer able to be prevented, and wear of the brush 2 at the tip portion, an increase in the gap between the brush 2 and the other part 10, and an increase in resultant leakage is eliminated.

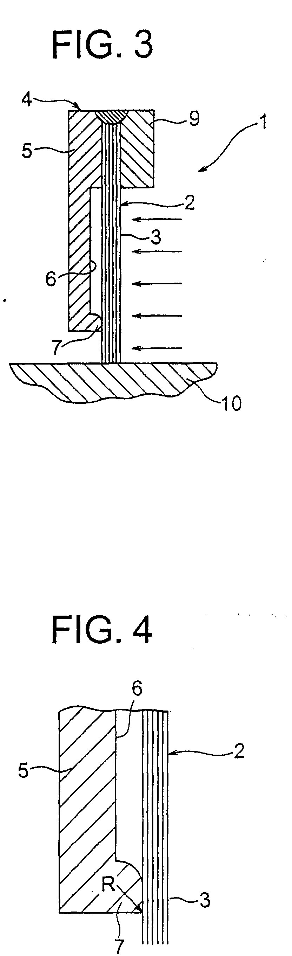

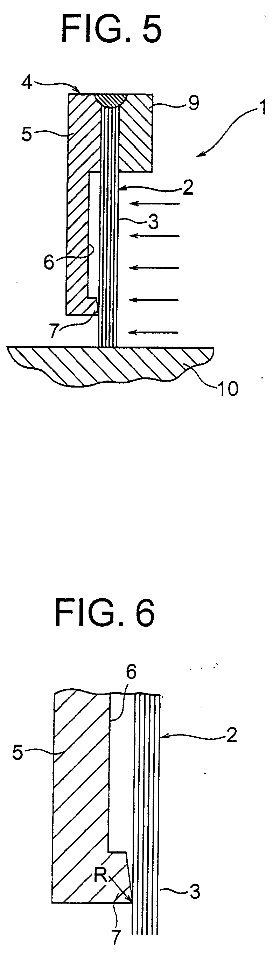

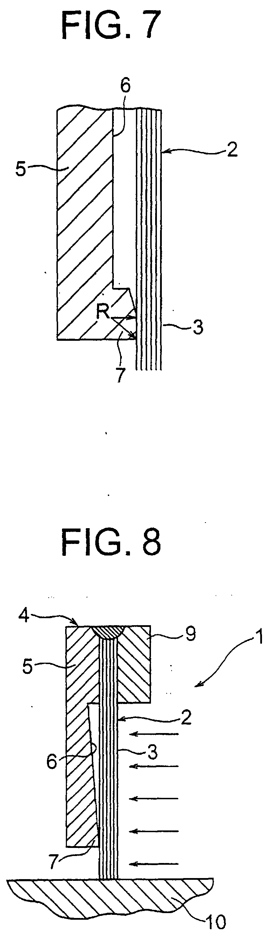

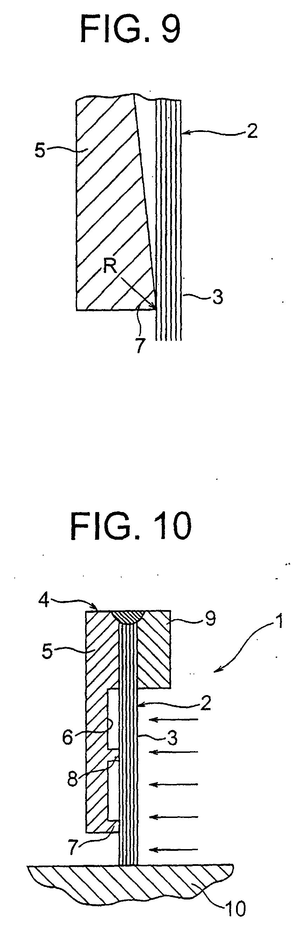

In the above-described explanation, the front surface of the edge portion 7 of the pressure balancing groove 6 is formed into an arc surface. However, only a corner portion of the outside diameter side (the groove side) of the edge portion 7 may be formed into an arc surface (see Figs. 3 and 4 of the second embodiment), the entire surface of the edge portion 7 may be formed into a tapered surface at a predetermined angle (see Figs. 5 and 6 of the second embodiment), the inside diameter side of the edge portion 7 may be formed into a flat surface and the outside diameter side may be formed into a tapered surface at a predetermined angle (see Fig. 7 of the fourth embodiment), or the bottom surface of the pressure balancing groove 6 may be formed into a tapered surface at a predetermined angle (see Figs. 8 and 9 of the fifth embodiment). It is as a matter of course that in any of the above cases the similar operational effects as shown in the above-described embodiment are obtained.

A sixth embodiment of the brush seal device according to this invention is shown in Fig. 10. In this brush seal device 1, a supporting portion 8 is provided inside the pressure balancing groove 6 of the back plate 5. The other construction is the same as that in the first embodiment.

Further, the supporting portion 8, formed so as to have a rectangularly shaped cross section, is provided annularly over the entire central portion of the pressure balancing groove 6. The supporting portion 8 divides the inside of the pressure balancing groove 6 into two in the radial direction.

In addition, also in the brush seal device 1 according to the sixth embodiment, like the brush seal device as shown in the first embodiment, the pressure balancing groove 6 is provided in the contact surface (the support surface) of the back plate 5 with the brush 2. Therefore, the pressure balancing groove 6 can reduce the force pressing the brush 2 in the direction toward the back plate 5.

In some cases the other part 20 may be off-centered by rotation, be deformed by rotational force, or there may be a relative dimensional change between the other part 20 and the one part (fixed body) due to difference of thermal expansion coefficients or the like. Even in these cases, since friction resistance between the back plate 5 and the brush 2 and between each thin bristle 3 of the brush is small, the brush 2 can be prevented from being pressed to the back plate 5 and retained. In addition, the brush 2 can be smoothly deflected so as to escape in the radial direction in accordance with the movement of the other part 10, such that wear of the brush 2 at the tip portion is prevented.

In addition, even when the expansion or the eccentricity of the other part 10 becomes smaller, the brush 2 is prevented from being retained in a state where it is deflected to the back plate 5 side, such that the brush 2 can smoothly return from the state in which the brush is deflected to its original state. Accordingly, the gap between the tip portion of the brush 2 and the other part 10 is not increased, and leakage is prevented.

Further, since the supporting portion 8 is provided annularly over the entire central portion of the pressure balancing groove 6, the brush 2 is supported by the supporting portion 8 when it is pressed in the direction toward the pressure balancing groove 6. This, accordingly, can reduce the amount of the deformation of the brush 2 in the direction toward the pressure balancing groove 6. Therefore, wear of the brush 2 can be prevented even if the brush 2 is repeatedly deflected in the radial direction in accordance with the movement of the other part 10, or even if the brush 2 is repeatedly pressed in the direction toward the pressure balancing groove 6, or if the brush 2 abuts against the edge portion 7 formed at the periphery of the pressure balancing groove 6.

Therefore, the chance will become less that a part of the brush 2 that wears out will catch on the edge portion 7 at the periphery of the pressure balancing groove 6 so as to inhibit the smooth movement of the brush 2 in the radial direction. Also wear of the brush 2 at the tip portion, an increase in the gap between the brush 2 and the other part 10, and an increase in leakage can be prevented.

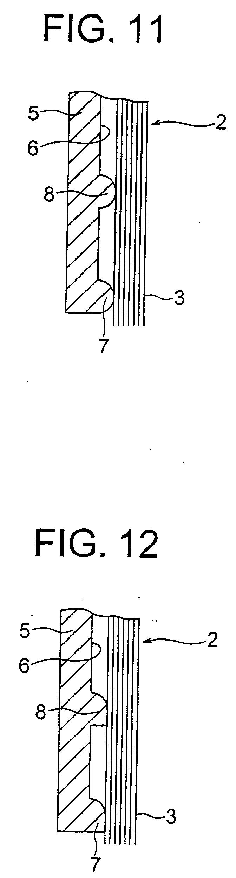

In the above-described explanation, the edge portion 7 and the supporting portion 8 of the pressure balancing groove 6 are formed into a flat surface. However, the entire surface of the edge portion 7 and the supporting portion 8 may be formed into an arc surface (see Fig. 11 of the seventh embodiment), only the corner portions at the outside diameter side of the edge portion 7 and the supporting portion 8 may be formed into an arc shape (see Figs. 12 of the eighth embodiment), the entire protruded surfaces of the edge portion 7 and the supporting portion 8 may be formed into a tapered surface at predetermined angles (see Fig. 13 of the ninth embodiment), or the inside diameter sides, which are not shown, of the edge portion 7 and the supporting portion 8 may be shaped into a flat surface, and the outside diameter sides thereof may be formed into a tapered surface at predetermined angles. It is as a matter of course that in any of the above cases, similar operational effects as shown in the above-described embodiment will be obtained.

As above-described, an edge portion 7 is formed at the periphery of the pressure balancing groove 6 into a gently slanted surface such as a tapered surface, an arc surface (which is popularly termed as R surface), a surface entire of which is made by a combination of a tapered surface and a arc surface, or the like. As a result, wear of the brush 2 can be prevented even if the brush 2 is repeatedly deflected in the radial direction in accordance with the movement of the other part, or further even if the brush 2 repeatedly contacts the edge portion 7. Further, since the brush 2 does not catch on the edge portion 7, the brush can be smoothly moved in the radial direction or the direction of the slant, and contact force of the brush to the other part 10 can be decreased.

Further, when the bottom surface of the pressure balancing groove 6 is formed into a tapered surface, the bottom surface, in cooperation with the gently slanted surface of the edge portion 7, can prevent wear of the brush 2 at the portion in contact.

In addition, as another embodiment of this invention as shown in Fig. 15, the thin bristles 3 of the brush 2 are designed to be slanted relative to the other part 10 (20). This enables the brush 2 to be deflected more easily in the direction of the slant in coordination with the pressure balancing groove 6 when the brush 2 is pressed to the other part 20. In addition, the edge portion 7 is formed into an arc shape or a slanted surface, friction is further reduced and contact force is also reduced.

Although specific embodiments of the present invention were explained above, it is obvious that the explanation of these embodiments does not cover this entire invention, nor is the present invention limited to the embodiment disclosed herein, but various changes and modifications can be permitted from these embodiments. The technical scope of the present invention is prescribed by the claims.

### Industrial Applicability

As stated above, the brush seal device according to the present invention is appropriate for sealing a gap between portions of two parts in a gas turbine, steam turbine, and the like, wherein the portions are those whose thermal expansion coefficients according to temperature differ, or portions which vibrate due to rotation, or portions which move relative to each other. Particularly, the brush seal device is suitable as a seal used in portions where the dimensions of the gap between two parts change, since wear of a portion in contact is particularly small thereby exerting good durability.

## Claims

1. A brush seal device in which an attachment portion at one end is retained by one of two parts that move relatively and a seal portion at the other end faces the other part for sealing, comprising:
a brush (2), made by arranging a plurality of thin bristles (3), provided with an attachment portion secured at one end and a seal portion for dividing between the two parts at the other end, and a retaining portion (4) which retains the attachment portion at one end of the brush (2), provided with a support surface disposed in parallel with the brush (2) to support the seal portion relative to a direction of action of sealed fluid; wherein
a pressure balancing groove (6) is formed in the support surface, and an edge portion (7) which contacts the brush (2) on the edge forming the pressure balancing groove (6) is formed into a gently slanted surface so that even if the brush (2) contacts the edge portion (7) the brush (2) does not wear out.

2. A brush seal device in which an attachment portion at one end is retained by one of two parts that move relatively and a seal portion at the other end faces the other part for sealing, comprising:
a brush (2), made by arranging a plurality of thin bristles (3), provided with an attachment portion at one end and a seal portion for dividing between the two parts at the other end, and a retaining portion (4) which retains the attachment portion at one end of the brush (2), provided with a support surface disposed in parallel with the brush (2) to support the seal portion relative to a direction of action of sealed fluid; wherein
a pressure balancing groove (6) is formed in the support surface, and the bottom surface of the pressure balancing groove (6) has a tapered surface slanted toward the attachment portion of the brush (2).

3. A brush seal device according to claim 1, wherein the brush (2) is slanted in one direction relative to the other part.

4. A brush seal device according to claim 1, further comprising a supporting portion (8) for supporting the brush (2) inside the pressure balancing groove (6).

5. A brush seal device according to claim 4, wherein a corner portion of the supporting portion (8) abutting against the brush (2) is formed into an arc shaped surface or a slanted surface.
